# EUROPEAN PATENT APPLICATION

(11) **EP 4 751 860 A1**
(43) Date of publication of application: **03.06.2026**
(21) Application number: 25161685.0
(22) Date of filing: 04.03.2025
(51) Int. Cl.: B25J 9/16, G05B 19/418, B07C 1/04, B65G 47/24, G05B 19/4061

(54) **ADAPTABLE MACHINE CONFIGURATION FOR NON-RIGID OBJECT PRE-PROCESSING COLLISION REGULATATION**

(30) Priority: 28.11.2024 IT 202400027009
(71) Applicant: Politecnico di Milano, 20133 Milano (IT)
(72) Inventor: Urgo, Marcello, 20127 Milano (IT); Berardinucci, Francesco, 66023 Chieti (IT)
(74) Representative: Bringer IP

(57) **Abstract**

Collision regulation of non-rigid objects conveyed for processing in a machine includes a selection of a collision model for a specified object type of a non-rigid object. Thereafter, an arrangement of objects of the specified object type is sensed on a conveyance for a machine adapted to process the objects. The collision model is then queried for a collision state of the objects prior to conveyance into the machine and, in response to the querying, a collision metric is received from the collision model. Finally, the collision metric is matched to a regulated set of machine configuration parameters and so that the regulated set is applied to the machine.

## Description

### BACKGROUND OF THE INVENTION

### Field of the Invention

The present invention relates to the technical field of machine configuration through parameterization and more particularly to the parameterized configuration of a machine in order to regulate collisions amongst non-rigid objects conveyed into the machine.

### Description of the Related Art

Modern industrial machines are often characterized by an extreme degree of complexity. Many industrial machines require a configuration entailing a large number of parameters which control the behavior of the machine. As such, both the manufacturers and the end users of industrial machinery typically take a very cautious approach in machine configuration, starting with the use of established parameters suggested by the manufacturer or expert user groups, followed by only small adjustments. Yet, the efficiency of use of the same industrial machinery can vary from end user to end user depending upon environmental factors and more often than not, the type of objects acted upon the machinery.

In this regard, the effective operation of industrial machinery in many instances depends upon the manner in which objects to be processed by the machinery are conveyed into an entry port of the machinery so that the machinery can then process the objects. Central to the control of the conveyance mechanism for industrial machinery is the rate at which objects enter the machinery and at what orientation the objects enter the machinery. And then again, much of the conveyance control depends upon the type of object conveyed, with rigid objects like metallic elements being treated differently than non-rigid objects such as timber.

To wit, the effective conveyance of timber, and other like non-rigid objects such as rubber or food product, into industrial machinery requires an efficient orientation of timber prior to the timber entering timber processing machinery. In that timber is a non-rigid object, a packing density of the non-rigid objects while on the conveyance to the machinery can act as a mechanism to properly orient the timber on the conveyance. Specifically, the packing density of non-rigid objects on a conveyance causes collisions amongst the non-rigid objects resulting in a uniform orientation of the non-rigid objects prior to the objects entering the machinery from the conveyance. Thus, regulating the collisions amongst the non-rigid objects can produce the desired orientation of the objects for effective processing of the objects within the machinery.

### BRIEF SUMMARY OF THE INVENTION

Embodiments of the present invention address technical deficiencies of the art in respect to machine configuration of machines adapted to process non-rigid objects conveyed into the machine from a conveyance pathway in order to regulate the conveyance of the non-rigid objects for collisions therebetween. To that end, embodiments of the present invention provide for a novel and non-obvious method for collision regulation of non-rigid objects conveyed for processing in a machine. Embodiments of the present invention also provide for a novel and non-obvious computing device adapted to perform the foregoing method. Finally, embodiments of the present invention provide for a novel and non-obvious data processing system incorporating the foregoing device in order to perform the foregoing method.

In one embodiment of the invention, a method for collision regulation of non-rigid objects, for example timber, that are conveyed for processing in a machine includes selecting a collision model for a specified object type of a non-rigid object and sensing an arrangement of objects of the specified object type on a conveyance for a machine adapted to process the objects. The method additionally includes querying the collision model for a collision state of the objects prior to conveyance into the machine and receiving from the collision model in response to the querying a collision metric. Finally, the method includes matching the collision metric to an regulated set of machine configuration parameters and applying the regulated set to the machine.

Aspects of the embodiment provide for different regulated sets including one or more of the following exemplary regulated sets employed alone or in combination with one another:
- a rate of conveyance into the machine.
- a dimensioning of a conveyance pathway into the machine.
- an angle of ascent/descent of a conveyance pathway into the machine.
Additionally aspects of the embodiment, the sensing is performed by an optical imaging of the arrangement of objects on a conveyance pathway into the machine. As such, the querying can be a comparison of the arrangement of objects to images of other objects of the specified type with known collision metrics or a submission of the optical imaging to a convolutional network trained to predict collision metrics responsive to specific input images.

In another embodiment of the invention, a data processing system is adapted for collision regulation of non-rigid objects conveyed for processing in a machine. The system includes a machine adapted to process non-rigid objects and a conveyance conveying the non-rigid objects into an entry point of the machine. The system also includes a host computing platform having one or more computers, each with memory and one or processing units including one or more processing cores. Finally, the system includes a collision regulation module.

The module includes computer program instructions enabled while executing in the memory of at least one of the processing units of the host computing platform to perform a selection of a collision model for a specified object type of the non-rigid objects. The instructions further are enabled to perform a sensing of an arrangement of the non-rigid objects of the specified object type on the conveyance into the machine and a subsequent querying of the collision model for a collision state of the non-rigid objects prior to conveyance into the machine so as to receive from the collision model in response to the querying a collision metric. Finally, the program instructions are enabled to match the collision metric to an regulated set of machine configuration parameters and to apply the regulated set to the machine.

In yet another embodiment of the invention, a computing device is provided and includes a non-transitory computer readable storage medium having program instructions stored therein. The instructions are executable by at least one processing core of a processing unit in order to cause the processing unit to perform collision regulation of non-rigid objects conveyed for processing in a machine. Specifically, the instructions select a collision model for a specified object type of a non-rigid object. The instructions then sense an arrangement of objects of the specified object type on a conveyance for a machine adapted to process the objects. Subsequently, the instructions query the collision model for a collision state of the objects prior to conveyance into the machine and receive in response from the collision model a collision metric. Finally, the instructions match the collision metric to an regulated set of machine configuration parameters and apply the regulated set to the machine.

In this way, the technical deficiencies of the problem of properly configuring industrial machinery to process non-rigid objects like timber are overcome owing to the monitoring of an arrangement of the non-rigid objects on the conveyance and comparing the monitored arrangement to a collision model in order to determine a collision metric for the objects that in turn can be used to select an appropriate set of configuration parameters for the industrial machinery based upon an regulation of collisions on the conveyance.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration reflecting different aspects of a process of collision regulation of non-rigid objects conveyed for processing in a machine;
Figure 2 is a block diagram depicting a data processing system adapted to perform one of the aspects of the process of Figure 1; and,
Figure 3 is a flow chart illustrating one of the aspects of the process illustrated in Figure 1.

### DETAILED DESCRIPTION OF THE INVENTION

Embodiments of the invention provide for collision regulation of non-rigid objects conveyed for processing in a machine. In accordance with an embodiment of the invention, a position of non-rigid objects such as timber, rubber or food product are sensed on a conveyor of a machine and a subsequent position of each of the non-rigid objects on the conveyor is predicted. Then, a collision metric is computed from the predicted position of each of the non-rigid objects so that the collision metric can be submitted to a collision model in order to determine an parameterized configuration of the conveyor to regulate collisions of the non-rigid objects, for instance an optimum speed of conveyance, angle of inclination or declination of the conveyor towards an opening of the machine, or a dimensioning of a channel of the conveyor through which the non-rigid objects pass en route to the opening of the machine. Finally, the conveyor is configured with the parameterized configuration.

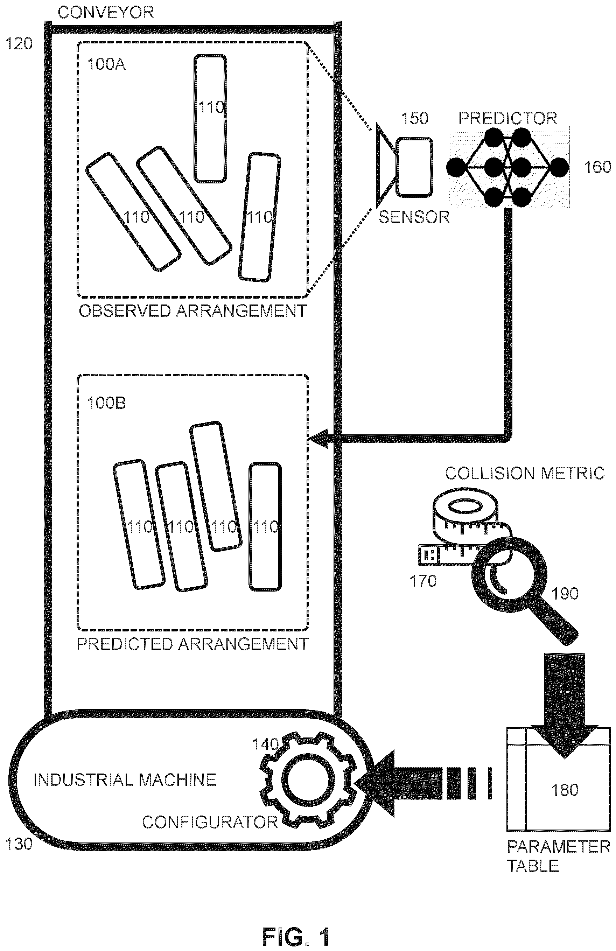

In illustration of one aspect of the embodiment, Figure 1 pictorially shows a process of collision regulation of non-rigid objects conveyed for processing in a machine. As shown in Figure 1, an arrangement 100A of different non-rigid objects 110, such as timber, rubber or food product, are conveyed along a conveyor 120 towards an opening of an industrial machine 130 adapted to process the non-rigid objects 110. The conveyance of the non-rigid objects 110 is performed by the conveyor 120 in accordance with conveyance parameters such as speed of conveyance, angle of inclination or declination of the conveyor 120 into an opening of the industrial machine 130, or a dimensioning of a channel of the conveyor 120 near the opening of the industrial machine 130.

A sensor 150 observes the arrangement 100A and provides information regarding the observation to a predictor 160, such as a content based image retrieval engine adapted to match imagery captured by the sensor 150 to previously acquired imagery of a known arrangement of the non-rigid objects 110 each associated with a different collision metric 170, or a convolutional neural network trained to correlate the imagery captured by the sensor 150 with a predicted collision metric 170. In either instance, a query 190 encapsulating the collision metric 170 is passed to a parameter table 180 of configuration parameters for the conveyor 120 and the result set from the query 190 is provided to a configurator 140 of the industrial machine 130 to configure the conveyor 120.

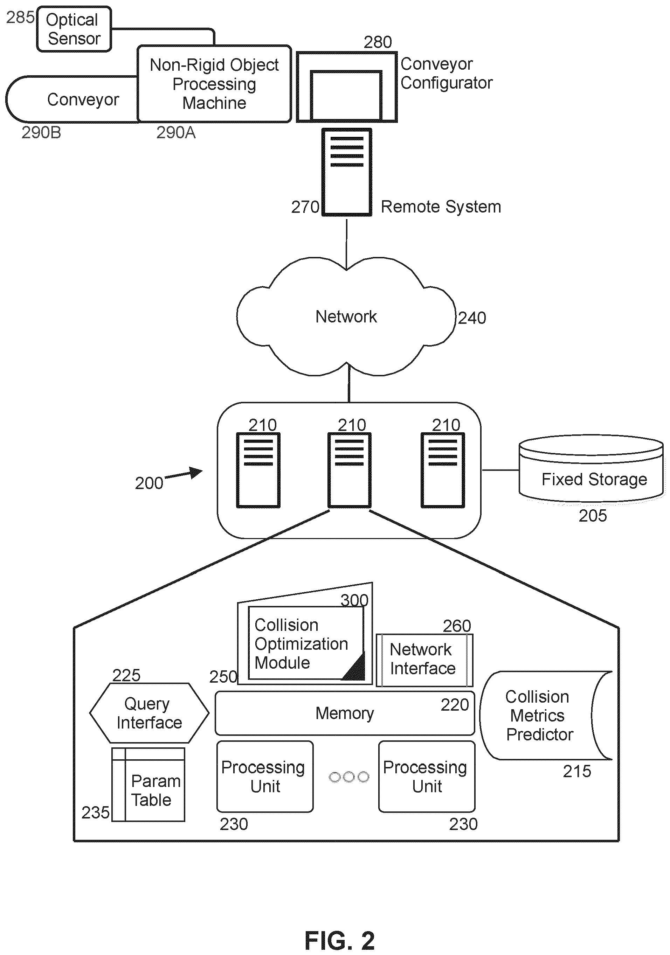

Aspects of the process described in connection with Figure 1 can be implemented within a data processing system. In further illustration, Figure 2 schematically shows a data processing system adapted to perform collision regulation of non-rigid objects conveyed for processing in a machine. In the data processing system illustrated in Figure 1, a host computing platform 200 is provided. The host computing platform 200 includes one or more computers 210, each with memory 220 and one or more processing units 230. The computers 210 of the host computing platform (only a single computer shown for the purpose of illustrative simplicity) can be co-located within one another and in communication with one another over a local area network, or over a data communications bus, and the host computing platform 200 is adapted for network communications through network interface 260 over a data communications network 240 such as by way of a 5G telecommunications network.

To that end, the host computing platform 200 is communicatively coupled to a remote system 270 over the data communications network 240. The remote system 270 supports the operation of a conveyor configurator 280 establishing the operational parameters of a conveyor 290B conveying non-rigid objects into a non-rigid object processing machine 290A. The conveyor configurator 280 further receives observational data from an optical sensor 285 in respect to the conveyor 290B as to an arrangement of non-rigid objects disposed thereupon and reports the observational data to the host computing platform 200 over the data communications network 240.

Notably, a computing device 250 including a non-transitory computer readable storage medium can be included with the host computing platform 200 and accessed by the processing units 230 of one or more of the computers 210. The computing device stores 250 thereon or retains therein a program module 300 that includes computer program instructions which when executed by one or more of the processing units 230, performs a programmatically executable process for collision regulation of non-rigid objects conveyed for processing in a machine.

Specifically, the program instructions during execution receive the observational data from the conveyor configurator 280 and submit the observational data to a collision metrics predictor 215. The collision metrics predictor 215 returns a collision metric correlated to the observational data and the program instructions then query a query interface 225 to a parameterization table 235 with the collision metric in order to receive in return, a set of one or more parameters configuring the conveyor 290B. Finally, the program instructions transmit a directive to the conveyor configurator 280 over the data communications network directing a configuration of the conveyor 290B with the one or more parameters.

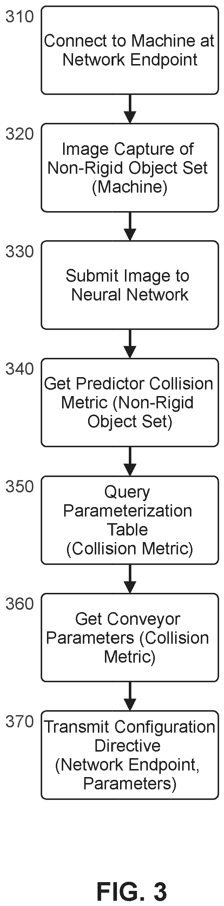

In further illustration of an exemplary operation of the module, Figure 3 is a flow chart illustrating one of the aspects of the process of Figure 1. Beginning in block 310, a network connection is established at a network endpoint for a non-rigid object processing machine with conveyor. In block 320, imagery is captured of non-rigid objects on the conveyor at the machine and the imagery is submitted to a convolutional neural network in block 330 that has been trained to correlate imagery of a specific arrangement of the non-rigid objects with an associated collision metric.

In block 340, the predicted collision metric is received from the convolutional neural network in connection with the non-rigid objects on the conveyor and in block 350, a parameterization table is queried with the collision metric in order to retrieve conveyor configuration parameters regulating collisions amongst the non-rigid objects based upon the collision metric. In block 360, a set of configuration parameters are received in response to the query. Finally, in block 370 a directive is transmitted to a configurator for the conveyor with the configuration parameters directing a configuration of the conveyor with the parameters.

Of import, the foregoing flowchart and block diagram referred to herein illustrate the architecture, functionality, and operation of possible implementations of systems, methods, and computing devices according to various embodiments of the present invention. In this regard, each block in the flowchart or block diagrams may represent a module, segment, or portion of instructions, which includes one or more executable instructions for implementing the specified logical function or functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

More specifically, the present invention may be embodied as a programmatically executable process. As well, the present invention may be embodied within a computing device upon which programmatic instructions are stored and from which the programmatic instructions are enabled to be loaded into memory of a data processing system and executed therefrom in order to perform the foregoing programmatically executable process. Even further, the present invention may be embodied within a data processing system adapted to load the programmatic instructions from a computing device and to then execute the programmatic instructions in order to perform the foregoing programmatically executable process.

To that end, the computing device is a non-transitory computer readable storage medium or media retaining therein or storing thereon computer readable program instructions. These instructions, when executed from memory by one or more processing units of a data processing system, cause the processing units to perform different programmatic processes exemplary of different aspects of the programmatically executable process. In this regard, the processing units each include an instruction execution device such as a central processing unit or "CPU" of a computer. One or more computers may be included within the data processing system. Of note, while the CPU can be a single core CPU, it will be understood that multiple CPU cores can operate within the CPU and in either instance, the instructions are directly loaded from memory into one or more of the cores of one or more of the CPUs for execution.

Aside from the direct loading of the instructions from memory for execution by one or more cores of a CPU or multiple CPUs, the computer readable program instructions described herein alternatively can be retrieved from over a computer communications network into the memory of a computer of the data processing system for execution therein. As well, only a portion of the program instructions may be retrieved into the memory from over the computer communications network, while other portions may be loaded from persistent storage of the computer. Even further, only a portion of the program instructions may execute by one or more processing cores of one or more CPUs of one of the computers of the data processing system, while other portions may cooperatively execute within a different computer of the data processing system that is either co-located with the computer or positioned remotely from the computer over the computer communications network with results of the computing by both computers shared therebetween.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A method for collision regulation of non-rigid objects conveyed for processing in a machine, the method comprising:
selecting a collision model for a specified object type of a non-rigid object;
sensing an arrangement of objects of the specified object type on a conveyance for a machine adapted to process the objects;
querying the collision model for a collision state of the objects prior to conveyance into the machine and receiving from the collision model in response to the querying a collision metric;
matching the collision metric to a regulated set of machine configuration parameters; and,
applying the regulated set to the machine.

2. The method of claim 1, wherein the regulated set includes a rate of conveyance into the machine.

3. The method of claim 1, wherein the regulated set includes a dimensioning of a conveyance pathway into the machine.

4. The method of claim 1, wherein the regulated set includes an angle of ascent/descent of a conveyance pathway into the machine.

5. The method of claim 1, wherein the non-rigid object is timber.

6. The method of claim 1, wherein the sensing is performed by an optical imaging of the arrangement of objects on a conveyance pathway into the machine and the querying is a comparison of the arrangement of objects to images of other objects of the specified type with known collision metrics.

7. The method of claim 1, wherein the sensing is performed by an optical imaging of the arrangement of objects on a conveyance pathway into the machine and the querying is a submission of the optical imaging to a convolutional network trained to predict collision metrics responsive to specific input images.

8. A data processing system adapted for collision regulation of non-rigid objects conveyed for processing in a machine, the system comprising:
a machine adapted to process non-rigid objects;
a conveyance conveying the non-rigid objects into an entry point of the machine;
a host computing platform comprising one or more computers, each with memory and one or processing units including one or more processing cores; and,
a collision regulation module comprising computer program instructions enabled while executing in the memory of at least one of the processing units of the host computing platform to perform:
selecting a collision model for a specified object type of the non-rigid objects;
sensing an arrangement of the non-rigid objects of the specified object type on the conveyance into the machine;
querying the collision model for a collision state of the non-rigid objects prior to conveyance into the machine and receiving from the collision model in response to the querying a collision metric;
matching the collision metric to a regulated set of machine configuration parameters; and,
applying the regulated set to the machine.

9. The system of claim 8, further comprising an optical sensor optically imaging the arrangement of objects on the conveyance into the machine so that the querying is a comparison of imagery produced by the sensor of the arrangement of the non-rigid objects to images of others of the non-rigid objects of the specified type with known collision metrics.

10. A computing device comprising a non-transitory computer readable storage medium having program instructions stored therein, the instructions being executable by at least one processing core of a processing unit to cause the processing unit to perform collision regulation of non-rigid objects conveyed for processing in a machine by:
selecting a collision model for a specified object type of a non-rigid object;
sensing an arrangement of objects of the specified object type on a conveyance for a machine adapted to process the objects;
querying the collision model for a collision state of the objects prior to conveyance into the machine and receiving from the collision model in response to the querying a collision metric;
matching the collision metric to a regulated set of machine configuration parameters; and,
applying the regulated set to the machine.
